# EUROPEAN PATENT APPLICATION

(11) **EP 4 755 847 A1**
(43) Date of publication of application: **10.06.2026**
(21) Application number: 24849034.4
(22) Date of filing: 25.07.2024
(51) Int. Cl.: C01B 21/082, B01J 27/24, C01B 3/04, C01G 25/00, C01G 39/00, C01G 49/00, C01G 53/00

(54) **BARIUM NITRIDE, METAL CARRIER, AND AMMONIA DECOMPOSITION CATALYST**

(30) Priority: 31.07.2023 JP 2023124281
(71) Applicant: Japan Science and Technology Agency, Kawaguchi-shi, Saitama 332-0012 (JP)
(72) Inventor: KITANO, Masaaki, Tokyo 152-8550 (JP); HOSONO, Hideo, Tokyo 152-8550 (JP); ZHANG, Zhujun, Tokyo 152-8550 (JP); YOKOYAMA, Toshiharu, Tokyo 152-8550 (JP)
(74) Representative: Dolphin, Kirsty Mairi
(86) International application number: PCT/JP2024/026562
(87) International publication number: WO 2025/028379

(57) **Abstract**

Provided is an ammonia decomposition catalyst which exhibits high ammonia decomposition activity even at a low reaction temperature and a low reaction pressure, and which has stable catalytic properties such that it can be repeatedly used in reactions even after being exposed to air or water. A barium nitride of the present invention is represented by the following general formula (1): BaAN₂₋ₓ (1), wherein in general formula (1), A represents at least one element selected from the group consisting of Si, Fe, Ni, Mo, and Zr, and x represents a value expressed by 0 ≤ x < 2.0.

## Description

### TECHNICAL FIELD

The present invention relates to a barium nitride, a metal-supported material, and an ammonia decomposition catalyst.

This application claims priority based on Japanese Patent Application No. 2023-124281 filed in Japan on July 31, 2023, the contents of which are incorporated herein by reference.

### BACKGROUND ART

Ammonia decomposition is an endothermic reaction, and the higher the temperature, the more thermodynamically favorable the reaction becomes on the product side. From Le Chatelier's principle, lower pressure is also more favorable to the product side. In this respect, ammonia decomposition is significantly different from ammonia synthesis, which is an exothermic reaction; in ammonia synthesis, lower temperature is thermodynamically more favorable to ammonia formation, and higher pressure is more favorable to the product side. In addition, in ammonia synthesis, the dissociation of N₂ molecules is generally the rate-determining step. In contrast, in ammonia decomposition, cleavage of the N-H bond proceeds relatively easily, and it is generally considered that the process in which atomic nitrogen species on a metal surface associate and desorb as N₂ molecules is the rate-determining step.

In ammonia decomposition reactions using catalysts in which Ni is usually supported on oxides, carbon, or the like, for example, an ammonia conversion exceeding 90% is often achieved only when the temperature is raised to a high temperature of 600°C or higher. In such Ni-based catalysts, the reaction temperature region used is about 100°C to 200°C higher than that of Ru-based catalysts (for example, Patent Document 1).

Meanwhile, it has been reported that ammonia can be decomposed even by using a Ni-supported CaNH catalyst in which Ni was used as the supported metal instead of Ru (for example, Non-Patent Document 1). This is considered to be because ammonia molecules are directly activated by electrons generated at NH defects on the CaNH support, rather than the Ni surface serving as the active site.

### Citation List

### Patent Document

Patent Document 1: Japanese Unexamined Patent Application Publication No. 2019-167265

### NON-PATENT DOCUMENTS

Non-Patent Document 1: Ogasawara, Kiya et al., "Ammonia Decomposition over CaNH-Supported Ni Catalysts via an NH2--Vacancy-Mediated Mars-van Krevelen Mechanism," ACS Catal., 11, 17, pp. 11005-11015 (2021)

### SUMMARY OF INVENTION

### Solution to Problem

Metal-supported catalysts as described in Patent Document 1 generally use carbonaceous supports such as activated carbon or inorganic oxide supports. However, in these metal-supported catalysts, particularly in cases where the supported metal species is a non-Ru metal, the reaction activity is low, and their performance is insufficient for practical use. On the other hand, the Ni-supported catalysts described in Non-Patent Document 1 have high reaction activity, but the Ni-supported CaNH catalyst is unstable in air, and CaNH is oxidized and altered by reaction with oxygen and moisture in the air.

That is, there is a demand for an ammonia decomposition catalyst which exhibits high ammonia decomposition activity even at a low reaction temperature and a low reaction pressure, and which has stable catalytic properties such that it can be repeatedly used in reactions even after being exposed to air or water.

### Solution to Problem

The present inventors have found that, by loading a transition metal on a barium nitride, it is possible to obtain an ammonia decomposition catalyst in which improvement of reaction activity and stabilization of catalytic properties are compatible, and thereby have completed the present invention.

That is, the gist of the present invention is as follows.
[1] A barium nitride represented by the following general formula (1):

   BaAN₂₋ₓ (1)

   (In general formula (1), A represents at least one element selected from the group consisting of Si, Fe, Ni, Mo, and Zr, and x represents a value expressed by 0 ≤ x < 2.0.)
[2] The barium nitride according to item [1], wherein, in general formula (1), A is Si.
[3] A metal-supported material in which a transition metal is supported on a support,
   wherein the support comprises the barium nitride according to item [1] or [2].
[4] The metal-supported material according to item [3], wherein the transition metal is at least one metal element selected from the group consisting of Group 8, Group 9, and Group 10 metal elements of the periodic table.
[5] The metal-supported material according to item [3], wherein the transition metal is at least one metal selected from the group consisting of Ru, Ni, Fe, and Co.
[6] The metal-supported material according to item [3], wherein the transition metal is at least one metal selected from the group consisting of Ru and Ni.
[7] An ammonia decomposition catalyst comprising the barium nitride according to item [1] or [2].
[8] An ammonia decomposition catalyst comprising the metal-supported material according to any one of items [3] to [6].
[9] A method for producing hydrogen, comprising a step of bringing the ammonia decomposition catalyst according to item [7] into contact with ammonia and a step of collecting hydrogen produced in the step.
[10] A method for producing hydrogen, comprising a step of bringing the ammonia decomposition catalyst according to item [8] into contact with ammonia and a step of collecting hydrogen produced in the step.
[11] Use of the barium nitride according to item [1] or [2] as an ammonia decomposition catalyst.
[12] Use of the metal-supported material according to any one of items [3] to [6] as an ammonia decomposition catalyst.

### Effects of the Invention

The ammonia decomposition catalyst of the present invention is suitable as an ammonia decomposition catalyst which exhibits high ammonia decomposition activity even at a low reaction temperature and a low reaction pressure, and which has stable catalytic properties such that it can be repeatedly used in reactions even after being exposed to air or water.

### BRIEF DESCRIPTION OF DRAWINGS

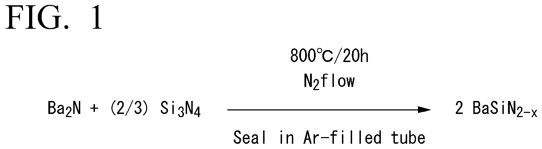

FIG. 1 is a reaction scheme showing a method for producing BaSiN₂₋ₓ in Example 1.
FIG. 2 is a diagram showing the XRD results of BaSiN₂₋ₓ synthesized in Example 1.
FIG. 3 is a graph showing the temperature dependence of ammonia decomposition efficiency in Example 1 and Comparative Examples 1 and 2.
FIG. 4 is a graph showing the temperature dependence of ammonia decomposition efficiency in Examples 1 to 4.

### DESCRIPTION OF EMBODIMENTS

### [Barium Nitride]

A barium nitride according to one embodiment of the present invention (the present embodiment) is a barium nitride represented by the following general formula (1).

BaAN₂₋ₓ (1)

In general formula (1), A represents at least one element selected from the group consisting of Si, Fe, Ni, Mo, and Zr, and x represents a value expressed by 0 ≤ x < 2.0. It is preferable that x represents a value expressed by 0 ≤ x < 1.0, and more preferably x represents a value expressed by 0 ≤ x < 0.3.

It is preferable that, in general formula (1), A is Si. That is, it is preferable that the barium nitride of the present embodiment is a barium nitride represented by the following general formula (2).

BaSiN₂₋ₓ (2)

In general formula (2), x represents a value expressed by 0 ≤ x < 2.0. It is preferable that x represents a value expressed by 0 ≤ x < 1.0, and more preferably x represents a value expressed by 0 ≤ x < 0.3.

The amount of nitrogen contained in the barium nitride of the present invention is not particularly limited.

It is preferable that x satisfies, for example, a relationship such that the barium nitride is electrically neutral, for example, Ba valence + A valence + [N valence × (2 - x)] = 0.

Specific examples of the barium nitride of the present invention include, for example, BaSiN_{1.78}, BaFe_{0.33}N, BaNiN, BaMo_{0.33}N_{1.33}, and BaZrN₂.

### <Method for Producing Barium Nitride>

A method for producing the barium nitride represented by the following general formula (1) according to the present invention comprises a step of heating Ba₂N and a nitride or metal represented by the following general formula (3) under an argon or nitrogen atmosphere.

AₛNₜ (3)

(In general formula (3), s represents a value of 1 to 3. t represents a value of 0 to 4.)

In general formula (3), A represents at least one element selected from the group consisting of Si, Fe, Ni, Mo, and Zr.

Specific examples of the nitride represented by general formula (3) include, for example, Si₃N₄, Fe₃N₄, Ni, Mo₂N, and ZrN.

It is preferable that, in general formula (3), A is Si. That is, it is preferable that the barium nitride of the present embodiment comprises a step of heating Ba₂N and Si₃N₄ under an argon or nitrogen atmosphere.

In the above heating step, the heating temperature is preferably in a range of 600°C to 1000°C, more preferably in a range of 700°C to 1000°C, and still more preferably in a range of 800°C to 900°C. For example, in the Examples described later, the heating temperature was 800°C. The gas pressure of argon or nitrogen is preferably in a range of 0.01 MPa to 3.0 MPa, and more preferably in a range of 0.1 MPa to 1.0 MPa. Argon or nitrogen may be filled into a reaction vessel, or argon or nitrogen may be flowed through the reaction vessel. The reaction time is not particularly limited, but is preferably 1 to 100 hours, more preferably 2 to 50 hours, and still more preferably 5 to 20 hours. For example, in the Examples described later, the heating temperature was 800°C and the reaction time was 20 hours.

The raw materials of the method for producing the barium nitride of the present invention, that is, Ba₂N and the nitride or metal represented by general formula (3), may be commercially available products, or may be produced by known methods. Examples of commercially available raw material products include, for example, Si₃N (purity > 99.9%) manufactured by Kojundo Chemical, Fe₃N₄ (99.9%) manufactured by Kojundo Chemical, Ni (99.9%) manufactured by Kojundo Chemical, and ZrN (98%) manufactured by Kojundo Chemical.

On the other hand, examples of raw materials produced by known methods include, for example, Ba₂N, which may be synthesized by using metallic Ba (99.99%) manufactured by Aldrich as a raw material and heating it at 600°C for 16 hours under an N₂ atmosphere. In addition, in the case of Mo₂N, it may be synthesized by using MoO₃ (99.8%) manufactured by Kojundo Chemical as a raw material and heating it at 700°C for 15 hours under an ammonia gas flow.

Detailed production methods will be described in each of the embodiments described later. For example, the method may comprise a step of heating Ba₂N and a nitride corresponding to a desired barium nitride under an argon or nitrogen atmosphere.

Examples of process conditions in the above heating step include, for example, a method of carrying out a heat treatment at 600°C to 1000°C for 1 to 50 hours, preferably at 700°C to 1000°C for 2 to 30 hours, and more preferably at 800°C to 900°C for 5 to 20 hours under argon filling. In addition, examples include heat treatment conditions of 600°C to 1000°C for 1 to 50 hours, preferably 700°C to 1000°C for 2 to 30 hours, and more preferably 800°C to 900°C for 5 to 20 hours in a nitrogen gas flow.

### <Quantitative Analysis of Nitrogen Contained In Barium Nitride>

The amount of nitrogen in the barium nitride BaAN₂₋ₓ produced as described above can be determined, for example, by analyzing the sample with a CHN elemental analyzer.

### (Metal-Supported Material)

A metal-supported material according to one embodiment of the present invention (the present embodiment) is obtained by loading a transition metal on a support. The support is a barium nitride represented by the following general formula (1).

BaAN₂₋ₓ (1)

In general formula (1), A represents at least one element selected from the group consisting of Si, Fe, Ni, Mo, and Zr, and x represents a value expressed by 0 ≤ x < 2.0.

### [Barium Nitride]

It is preferable that the barium nitride contained in the metal-supported material of the present embodiment is the barium nitride of the present embodiment described above.

### [Transition Metal]

The transition metal used in the present embodiment is not particularly limited but is preferably at least one selected from transition metal elements of Groups 8, 9, and 10 of the periodic table.

Specific metal elements are not particularly limited but are usually Cr, Mo, Mn, Re, Fe, Ru, Os, Co, Rh, Ni, Pd, and Pt. From the standpoint of having a high bond energy with nitrogen, Mo, Re, Fe, Ru, Os, Co, and Ni are preferable. More preferably, Ru, Co, Fe, or Ni is used. From the standpoint of having high reaction activity, Ru is preferable. In cases where economic factors are also emphasized, for example, Ni, Co, or Fe is preferable.

Each of the above elements may be used alone or in combination of two or more. Intermetallic compounds of these elements, such as Co₃Mo₃N, Fe₃Mo₃N, Ni₂Mo₃N, and Mo₂N, may also be used. Preferably, each element is used alone or in combination of two or more, and more preferably, it is advantageous in terms of ease of operation and cost in production to use an element alone.

The loading amount of the transition metal is not particularly limited, but is usually 0.01 parts by mass (0.01 % by mass) or more, preferably 0.5 parts by mass (0.5 % by mass) or more, more preferably 1 part by mass (1 % by mass) or more, and still more preferably 2 parts by mass (2 % by mass) or more, per 100 parts by mass of the support. The amount is usually 50 parts by mass (50 % by mass) or less, preferably 40 parts by mass (40 % by mass) or less, more preferably 30 parts by mass (30 % by mass) or less, and still more preferably 20 parts by mass (20 % by mass) or less. When the loading amount is at or above the lower limit, the effects of the present invention can be favorably obtained. When the amount is at or below the upper limit, the effects of the present invention can be expected with a balance between the loading amount and the cost.

### <Method for Loading Transition Metal on Barium Nitride>

The method for loading a transition metal on the barium nitride is not particularly limited, and, for example, a metal-supported material (hereinafter, M/BaAN₂₋ₓ) in which a metal is fixed to BaAN₂₋ₓ can be obtained by the following steps (I) and (II).
(I) A step of mixing the barium nitride (BaAN₂₋ₓ) represented by general formula (1) in powder form obtained by the above method with a compound of the metal to be loaded.
(II) A step of heating the mixture obtained in the above step under a gas atmosphere containing hydrogen at 250°C for 0.5 to 4 hours to thermally decompose the compound of the metal.

For example, metal-supported materials such as Ru-supported BaAN₂₋ₓ (abbreviated as Ru/BaAN₂₋ₓ), Co-supported BaAN₂₋ₓ (abbreviated as Co/BaAN₂₋ₓ), Fe-supported BaAN₂₋ₓ (abbreviated as Fe/BaAN₂₋ₓ), and Ni-supported BaAN₂₋ₓ (abbreviated as BaAN₂₋ₓ) can be synthesized by using BaAN₂₋ₓ and Ru₃(CO)₁₂, Co₂(CO)₈, Fe₂(CO)₉, and Ni(C₅H₅)₂, which are compounds of transition metals such as Ru, Co, Fe, and Ni to be loaded on the support.

It is preferable that the transition metal according to the present embodiment is in the form of transition metal particles. It is more preferable that the transition metal is nanoparticles having a particle diameter of 100 nm or less.

### (Ammonia Decomposition Catalyst)

An ammonia decomposition catalyst according to one embodiment of the present invention (the present embodiment) is obtained by loading a transition metal on a support. The support contains a barium nitride represented by the following general formula (1). It is also preferable that the support is the barium nitride represented by the following general formula (1).

BaAN₂₋ₓ (1)

In general formula (1), A represents at least one element selected from the group consisting of Si, Fe, Ni, Mo, and Zr, and x represents a value expressed by 0 ≤ x < 2.0.

### [Barium nitride]

It is preferable that the barium nitride contained in the ammonia decomposition catalyst of the present embodiment is the barium nitride of the present embodiment described above.

### [Transition metal]

The transition metal used in the present embodiment is the same as the transition metal used in the metal-supported material of the present embodiment described above.

In the ammonia decomposition catalyst of the present embodiment, the support may contain the metal-supported material of the present embodiment described above. The support may also be the metal-supported material of the present embodiment described above.

The shape of the ammonia decomposition catalyst of the present embodiment is not particularly limited, and may be any shape such as bulk, powder, or film. The particle diameter of the metal-supported material in powder form is not particularly limited, but is usually 1 nm or more and 10 µm or less.

The particle diameter of the transition metal in the ammonia decomposition catalyst of the present embodiment is not particularly limited, but is usually 1 nm or more and 100 nm or less. From the viewpoint that the number of step sites, which are active sites for nitrogen dissociation, increases when used as an ammonia decomposition catalyst, a particle diameter of 20 nm or less is preferred. More preferably, the particle diameter is 10 nm or less.

### <Method for Producing Ammonia Decomposition Catalyst>

The ammonia decomposition catalyst of the present invention is obtained by loading a transition metal on a support. The support contains the barium nitride (BaAN₂₋ₓ) of the present embodiment. Alternatively, the support contains the metal-supported material of the present embodiment. The ammonia decomposition catalyst of the present embodiment is produced by loading the transition metal on the support. The production method is not particularly limited, and the catalyst is usually produced by loading a transition metal or a compound serving as a precursor of the transition metal (hereinafter, "transition metal compound") on the support.

The raw material for the support used in the ammonia decomposition catalyst of the present embodiment may be a commercially available reagent or industrial raw material, or a material obtained by known methods from the corresponding metal.

The method for loading a transition metal on the support used in the present embodiment is not particularly limited, and known methods can be used. Usually, a method is used in which a transition metal compound that is a compound of a transition metal to be loaded and can be converted into the transition metal by reduction, thermal decomposition, or the like is supported on the support and then converted into the transition metal.

The transition metal compound is not particularly limited, and inorganic compounds of transition metals or organometallic complexes of transition metals that readily undergo thermal decomposition can be used. Specific examples include complexes of transition metals, oxides of transition metals, nitrates, chlorides, and other transition metal salts.

Examples of Ru compounds include triruthenium dodecacarbonyl [Ru₃(CO)₁₂], dichlorotetrakis(triphenylphosphine)ruthenium(II) [RuCl₂(PPh₃)₄], dichlorotris(triphenylphosphine)ruthenium(II) [RuCl₂(PPh₃)₃], tris(acetylacetonato)ruthenium(III) [Ru(acac)₃], ruthenocene Ru(C₅H₅)₂], nitrosyl nitrate ruthenium [Ru(NO)(NO₃)₃], potassium ruthenate, ruthenium oxide, ruthenium nitrate, and ruthenium chloride. Tris(acetylacetonato)ruthenium(III) [Ru(acac)₃] is preferable.

Examples of Fe compounds include iron pentacarbonyl [Fe(CO)₅], triiron dodecacarbonyl [Fe₃(CO)₁₂], diiron nonacarbonyl [Fe₂(CO)₉], iron tetracarbonyl iodide [Fe(CO)₄I₂], tris(acetylacetonato)iron(III) [Fe(acac)₃], ferrocene [Fe(C₅H₅)₂], iron oxide, iron nitrate, and iron chloride (FeCl₃).

Examples of Co compounds include dicobalt octacarbonyl [Co₂(CO)₈], tris(acetylacetonato)cobalt(III) [Co(acac)₃], cobalt(II) acetylacetonate [Co(acac)₂], cobaltocene [Co(C₅H₅)₂], cobalt oxide, cobalt nitrate, and cobalt chloride.

Examples of Ni compounds include nickel acetate [Ni(OCOCH₃)₂], nickel acetylacetonate [Ni(acac)z], nickel chloride [NiCl₂], nickelocene [Ni(C₅H₅)₂], and nickel nitrate.

Among these transition metal compounds, when transition metal carbonyl complexes such as [Ru₃(CO)₁₂], [Fe(CO)₅], [Fe₃(CO)₁₂], [Fe₂(CO)₉], [Co₂(CO)₈], and [Ni(C₅H₅)₂] are used, a transition metal is supported by heating after loading the complex on the support. Therefore, in producing the ammonia decomposition catalyst of the present embodiment, the reduction treatment described later can be omitted, and thus these transition metal carbonyl complexes are preferable.

When transition-metal nitrates such as iron nitrate, cobalt nitrate, and nickel nitrate are used, a transition metal is supported by heating after loading the nitrate by impregnation in an aqueous solution. Therefore, as a production method of the ammonia decomposition catalyst of the present embodiment, this is preferable because it is simple and leads to cost reduction.

The amount of the transition metal compound to be used is not particularly limited, and an amount sufficient to achieve a desired loading amount can be appropriately used. The lower limit of the amount of the transition metal compound to be used is, for example, 0.01 parts by mass (0.01 % by mass) or more, preferably 2 parts by mass (2 % by mass) or more, more preferably 10 parts by mass (10 % by mass) or more, and particularly preferably 20 parts by mass (20 % by mass) or more, per 100 parts by mass of the support. On the other hand, the upper limit of the amount of the transition metal compound to be used is, for example, 50 parts by mass (50 % by mass) or less, preferably 40 parts by mass (40 % by mass) or less, and more preferably 30 parts by mass (30 % by mass) or less.

Specific examples of methods for loading the transition metal compound on the support include methods such as an impregnation method, a physical mixing method, a CVD (chemical vapor deposition) method, and a sputtering method.

In the physical mixing method, the support and the transition metal compound are mixed in the solid state and then heated under a gas atmosphere containing hydrogen (the gas may be filled or flowed) or under vacuum. The heating temperature at this time is not particularly limited, but is usually 200°C or higher and 600°C or lower. The heating time is not particularly limited, but is usually 2 hours or longer.

When a transition metal compound that is converted into a transition metal by thermal decomposition is used, a transition metal is usually supported on the support at this stage by thermal decomposition, thereby providing the ammonia decomposition catalyst of the present embodiment.

When a transition metal compound that is not converted into a transition metal by thermal decomposition is used, the ammonia decomposition catalyst of the present embodiment can be obtained by reducing the transition metal compound by a usual method.

The method for reducing the transition metal compound (hereinafter, reduction treatment) is not particularly limited as long as the object of the present invention is not impaired. Examples include (I) a method carried out under an atmosphere containing a reducing gas, and (II) a method in which a reducing agent such as NaBH₄, NH₂NH₂, or formalin is added to a solution containing the transition metal compound, thereby depositing the metal on the surface of the metal hydride. A preferable example is a method carried out under an atmosphere containing a reducing gas. Examples of the reducing gas include hydrogen, ammonia, methanol (vapor), ethanol (vapor), methane, and ethane.

During the reduction treatment, components other than the reducing gas that do not inhibit the object of the present invention, in particular the ammonia decomposition reaction, may coexist in the reaction system. Specifically, gases such as argon and nitrogen that do not inhibit the reaction may coexist with a reducing gas such as hydrogen during the reduction treatment. Preferably, nitrogen is allowed to coexist.

When the reduction treatment is carried out in a gas containing hydrogen, the reduction treatment can be carried out in parallel with the ammonia decomposition described later by allowing nitrogen to coexist with hydrogen. That is, when the ammonia decomposition catalyst of the present embodiment is used as the ammonia decomposition catalyst described later, the transition metal compound supported on the metal hydride may be reduced and converted into a transition metal by placing it under the reaction conditions of the ammonia decomposition reaction.

The temperature during the reduction treatment is not particularly limited but is usually 200 °C or more, preferably 300 °C or more, and preferably less than 700 °C. More preferably, the treatment is performed at 400 °C or more and less than 700 °C. By performing the treatment within the above temperature range, growth of the transition metal proceeds sufficiently and within a preferable range.

The pressure during the reduction treatment is not particularly limited but is usually 0.01 MPa or more and 10 MPa or less. When the pressure during the reduction treatment is the same as the ammonia decomposition conditions described later, complicated operations can be avoided, which is advantageous from the standpoint of production efficiency.

The time of the reduction treatment is not particularly limited but is usually 1 hour or more, and preferably 2 hours or more, when carried out at atmospheric pressure. When carried out at a higher reaction pressure (for example, 1 MPa or more), a time of 1 hour or more is preferable.

When a transition metal compound other than those that are converted into a transition metal by thermal decomposition is used, the ammonia decomposition catalyst of the present embodiment is obtained by reducing the transition metal compound contained in the solid mixture by a conventional method, in the same manner as the reduction treatment method described above.

As components other than the barium nitride and the transition metal, carbonaceous materials such as activated carbon and inorganic oxides may be further contained as a support for the barium nitride.

The ammonia decomposition catalyst of the present embodiment can be used in the form of a molded body using a conventional molding technique. Specific examples of shapes include granules, spheres, tablets, rings, macaroni shapes, four-leaf clover shapes, dice, honeycomb shapes, and the like. The catalyst may also be used after being coated on a suitable support.

When the ammonia decomposition catalyst of the present embodiment is used, its reaction activity is not particularly limited. For example, when a weight hourly space velocity (WHSV) of supplied ammonia gas of 15000 mL g⁻¹ h⁻¹ is used, it is preferable that the hydrogen production rate at a reaction temperature of 500°C and a reaction pressure of 0.1 MPa is 400 mmol g⁻¹ h⁻¹ or more, more preferably 500 mmol g⁻¹ h⁻¹ or more, still more preferably 700 mmol g⁻¹ h⁻¹ or more, and most preferably 750 mmol g⁻¹ h⁻¹ or more. A hydrogen production rate of 500 mmol g⁻¹ h⁻¹ or more is suitable as practical production conditions. A hydrogen production rate of 700 mmol g⁻¹ h⁻¹ or more is suitable as higher-efficiency production conditions. A hydrogen production rate of 750 mmol g⁻¹ h⁻¹ or more is suitable as even higher-efficiency production conditions. Of course, when the above weight hourly space velocity (WHSV) is increased, it becomes possible to increase the hydrogen production rate suitable for practical production conditions accordingly.

Hereinafter, a method for producing hydrogen using the ammonia decomposition catalyst of the present embodiment will be described.

### (Method for Producing Hydrogen)

Hereinafter, a method for producing hydrogen by decomposing ammonia using the ammonia decomposition catalyst of the present embodiment will be described.

A method for producing hydrogen according to one embodiment of the present invention (hereinafter, sometimes referred to as "the hydrogen production method of the present embodiment") comprises a step of continuously supplying ammonia gas having a volume fraction of 0.1% to 100% to a catalyst layer composed of the ammonia decomposition catalyst of the present embodiment described above, and causing catalytic cracking under a reaction pressure of 0.01 MPa to 1.0 MPa and a reaction temperature of 300°C to 800°C at a weight hourly space velocity (WHSV) of 500 mL g⁻¹ h⁻¹ or more.

In the hydrogen production method of the present embodiment, the ammonia decomposition catalyst of the present embodiment is used as a catalyst, and ammonia is decomposed by reaction on the catalyst to produce hydrogen and nitrogen.

The reaction is represented by the following equation (A):

2NH₃→3H₂+N₂ (A)

The specific production method is not particularly limited as long as ammonia is brought into contact with the catalyst and decomposed on the catalyst to produce hydrogen, and the method can be carried out in accordance with known production methods as appropriate.

In the hydrogen production method of the present invention, the catalyst is usually heated when ammonia is brought into contact with the catalyst to produce hydrogen and nitrogen.

The reaction temperature in the production method of the present invention is not particularly limited, but is usually 300°C or higher, preferably 350°C or higher, and more preferably 400°C or higher, and is usually 800°C or lower, preferably 600°C or lower, and more preferably 500°C or lower. Since the ammonia decomposition reaction is an equilibrium reaction and an endothermic reaction, a high-temperature region is more favorable. However, it is preferable to carry out the reaction within the above temperature range in order to obtain a sufficient ammonia decomposition reaction rate.

Within the above temperature range, the decomposition reaction proceeds sufficiently while also being advantageous in terms of equipment.

When Ru is used as the transition metal according to the present embodiment, a temperature of 400°C or higher and 600°C or lower is more preferable as the reaction temperature. Similarly, when Ni or Co is used, a temperature of 500°C or higher and 750°C or lower is more preferable.

The reaction pressure in the hydrogen production method of the present invention is not particularly limited, but is usually 0.01 MPa or higher, preferably 0.05 MPa or higher, and usually 1.0 MPa or lower, preferably 0.5 MPa or lower, and more preferably 0.1 MPa or lower.

Since the ammonia decomposition reaction is an equilibrium reaction and a reaction accompanied by an increase in volume, lower-pressure conditions are more favorable. However, in order to obtain a sufficient ammonia decomposition reaction rate, it is preferable to carry out the reaction within the above pressure range. In addition, from the viewpoint of equipment, it is advantageous to carry out the reaction at 0.1 MPa.

The ammonia used in the hydrogen production method of the present invention is not particularly limited, and may be ammonia alone or ammonia diluted with a balance gas. That is, ammonia gas having a volume fraction of 1 ppm to 100% can be used.

In the hydrogen production method of the present invention, when hydrogen generated by bringing the catalyst into contact with ammonia is collected, hydrogen may be collected in a state where nitrogen coexists, or hydrogen may be collected in a hydrogen-rich state or in a state substantially consisting of hydrogen using a known method.

In the hydrogen production method of the present invention, in order to separate the generated hydrogen and nitrogen and collect hydrogen, a higher ammonia volume fraction is preferred, and the volume fraction is preferably 5% or more, more preferably 20% or more, and still more preferably 70% or more.

The weight hourly space velocity (WHSV) of ammonia is not particularly limited, but a high NH₃ conversion can be obtained by carrying out the reaction at 500 mL g⁻¹ h⁻¹ or more.

In the hydrogen production method of the present invention, it is preferable, from the standpoint of increasing conversion, to expose the catalyst to an atmosphere of a reducing gas such as hydrogen before bringing ammonia into contact with the catalyst, thereby activating the transition metal which is the catalytically active component. The temperature during such exposure is not particularly limited, but is usually 300°C or higher and 700°C or lower. The time for the exposure is not particularly limited, but is usually 30 minutes or longer and 2 hours or less.

In the hydrogen production method of the present invention, the type of reaction vessel is not particularly limited, and a reaction vessel that can normally be used for ammonia decomposition reactions can be used. Specific reaction modes include a batch reaction mode, a closed circulation reaction mode, and a flow reaction mode, among which the flow reaction mode is preferred from a practical point of view.

Since the ammonia decomposition reaction is an endothermic reaction, it is advantageous to carry out the reaction while supplying reaction heat, and in industrial practice, known methods for supplying reaction heat may be used to increase yield. For example, there can be used a method in which a part of the ammonia raw material is oxidized with air to obtain combustion heat while carrying out the ammonia decomposition reaction.

The material of the reaction vessel is not particularly limited, and a known material for use in ammonia decomposition reactions can be used. For example, the reaction can be carried out using a conventional gas-solid contact reaction apparatus made of a corrosion-resistant material such as stainless steel.

In the present invention, as in conventional methods, the ammonia decomposition reaction can be carried out using a single reactor or multiple reactors packed with the catalyst. Additionally, methods using a plurality of reactors connected together and methods using a reactor having a plurality of reaction layers in the same reactor can be used.

### EXAMPLES

Hereinafter, the present invention will be described in more detail based on Examples. The amount of converted NH₃ was quantified by gas chromatography, and the ammonia decomposition efficiency (NH₃ conversion (%)) was evaluated.

### (Gas Chromatograph (GC) Analysis)

The hydrogen production amounts in the following Examples and Comparative Examples were determined by gas chromatograph (GC) analysis using an absolute calibration curve method. The measurement conditions were as follows.

### [Measurement Conditions]

Measurement apparatus: GC14A (Shimadzu)
Column: PoraPak QS
Column temperature: 80°C
Carrier gas: He
Gas detector: TCD

### (XRD measurement)

X-ray diffraction of the material was measured using a D2 PHASER manufactured by Bruker, with Cu Kα as the X-ray source.
Voltage: 40 kV
Current: 40 mA

### (Example 1)

### [Production of BaSiN₂]

Metallic Ba (99.99%) manufactured by Aldrich was used as a raw material, and Ba₂N powder synthesized by heating this metallic Ba at 600°C for 16 hours in an N₂ atmosphere was mixed with Si₃N₄ powder (Kojundo Chemical, > 99.9%) at a molar ratio of 1:[2/3] in a glove box. The resulting mixture was then charged into a quartz glass tube, argon gas was filled into the quartz glass tube, and the tube was sealed. The quartz glass tube was subjected to firing at 800°C for 20 hours in an electric furnace. Thus, BaSiN₂ powder was obtained.

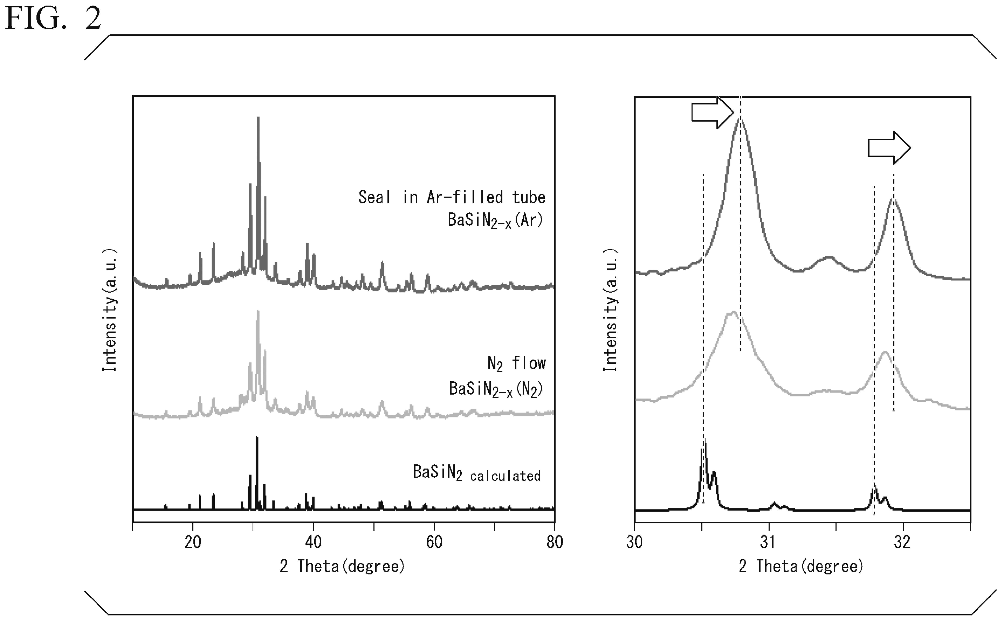

The results of the XRD evaluation of the BaSiN₂ powder are shown in FIG. 2. The XRD peak of BaSiN₂ shifts to a larger diffraction angle compared with the calculated XRD peak of BaSiN₂, which is presumably due to defects of lattice N³⁻.

### [Loading Ni on BaSiN₂]

Powdery BaSiN₂ (0.3 g) synthesized in the present Example and Ni(C₅H₅)₂ (0.051 g, 98%, manufactured by Tokyo Chemical Industry) (corresponding to 5 % by mass of supported metal Ni relative to BaSiN₂) were placed in a quartz glass reaction tube. Hydrogen was then flowed through the resulting quartz glass reaction tube at 2.5 mL/min, and the temperature was raised to 250°C over 0.5 hours and then maintained for an additional 1.5 hours, thereby obtaining a metal-supported material in which Ni was fixed to BaSiN₂ (hereinafter, Ni/BaSiN₂).

Ammonia decomposition was then carried out as described below using the ammonia decomposition catalyst thus obtained.

### [Ammonia Decomposition Using Ni-Supported BaSiN₂]

### <Ammonia Decomposition Reaction>

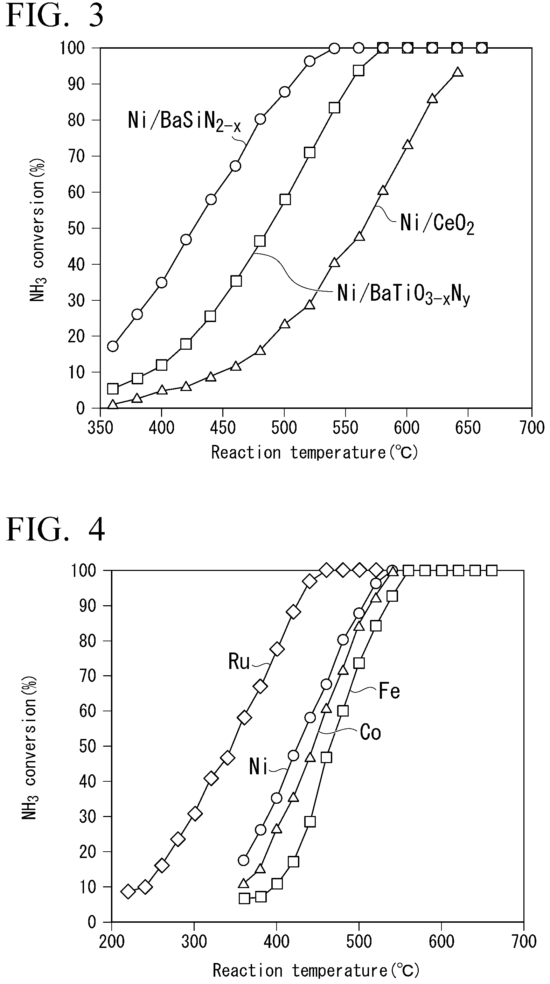

Using 5 % by mass Ni/ BaSiN₂ prepared in Example 1 as an ammonia decomposition catalyst, a reaction was carried out to decompose ammonia to generate nitrogen and hydrogen. The reaction was carried out in a fixed-bed flow reaction apparatus equipped with a glass tube packed with 0.1 g of the Ni supported material as an ammonia decomposition catalyst. Before the reaction, nitrogen at 5 mL/min and hydrogen at 15 mL/min were flowed, heated to 500°C in 1 hour, and further maintained for 1 hour to pretreat the catalyst. In the ammonia decomposition reaction, the flow rate of ammonia gas was set to NH₃: 25 mL/min (weight hourly space velocity (WHSV) 15000 mL g⁻¹h⁻¹), and the reaction was carried out under a reaction pressure of 0.1 MPa. The gas exiting from the fixed-bed flow reaction apparatus was collected, and the components of the collected gas were quantified by gas chromatography. The ammonia decomposition efficiency (NH₃ conversion) at 360°C to 660°C was measured. The results are shown in Table 1 and Fig. 3.

To evaluate the air stability of Ni-supported BaSiN₂, 5 % by mass Ni/BaSiN₂ prepared in Example 1 was used as a sample. After exposing the sample to air for 1 hour, the catalytic properties of the sample were confirmed by XRD evaluation and basic performance evaluation as a catalyst. As a result, it was confirmed that the catalytic properties were equivalent to those of the sample before exposure to air, demonstrating that the catalyst has stable catalytic properties.

### (Example 2)

### [Loading Ru on BaSiN₂]

Except that Ru₃(CO)₁₂ (99%, manufactured by Aldrich) was used in place of Ni(C₅H₅)₂, a metal-supported material in which Ru was fixed to BaSiN₂ (hereinafter, Ru/BaSiN₂) was obtained in the same manner as in Example 1.

Ammonia decomposition was then carried out as described below using the ammonia decomposition catalyst thus obtained.

### [Ammonia decomposition using Ru-supported BaSiN₂]

### <Ammonia Decomposition Reaction>

Except for using 5 % by mass Ru/BaSiN₂ prepared in Example 2, the same method as in Example 1 was carried out to perform a reaction to decompose ammonia to generate nitrogen and hydrogen. The results are shown in Table 1 and Fig. 4.

### (Example 3)

### [Loading Co on BaSiN₂]

Except that Co₂(CO)₈ (> 95%, manufactured by Tokyo Chemical Industry) was used in place of Ni(C₅H₅)₂, a metal-supported material in which Co was fixed to BaSiN₂ (hereinafter, 5 % by mass Co/BaSiN₂) was obtained in the same manner as in Example 1.

Ammonia decomposition was then carried out as described below using the ammonia decomposition catalyst thus obtained.

### [Ammonia Decomposition Using Co-Supported BaSiN₂]

### <Ammonia Decomposition Reaction>

Except for using 5 % by mass Co/BaSiN₂ prepared in Example 3, the same method as in Example 1 was carried out to perform a reaction to decompose ammonia to generate nitrogen and hydrogen. The results are shown in Table 1 and Fig. 4.

### (Example 4)

### [Loading Fe on BaSiN₂]

Except that Fe₂(CO)₉ (98%, manufactured by Aldrich) was used in place of Ni(C₅H₅)₂, a metal-supported material in which Fe was fixed to BaSiN₂ (hereinafter, 5 % by mass Fe/BaSiN₂) was obtained in the same manner as in Example 1.

Ammonia decomposition was then carried out as described below using the ammonia decomposition catalyst thus obtained.

### [Ammonia Decomposition Using Fe-Supported BaSiN₂]

### <Ammonia Decomposition Reaction>

Except for using 5 % by mass Fe/BaSiN₂ prepared in Example 4, the same method as in Example 1 was carried out to perform a reaction to decompose ammonia to generate nitrogen and hydrogen. The results are shown in Table 1 and Fig. 4.

### (Comparative Example 1)

### [Production of BaTiO₃₋ₓH_{z}]

Commercial TiO₂ powder (99.5%, manufactured by Aldrich) and BaH₂ powder were mixed at a molar ratio of 1:1 in a glove box. The resulting mixture was then charged into a quartz glass tube, and the tube was subjected to firing at 800°C for 20 hours in an electric furnace while flowing hydrogen gas at 10 mL min⁻¹ through the quartz glass tube. Thus, BaTiO_{2.01}H_{0.96} powder in which part of the oxide ions were substituted with hydride ions was obtained.

### [Production of BaTiO₃₋ₓN_{y} powder]

BaTiO₃₋ₓH_{z} powder obtained in Comparative Example 1 was heated to 600°C over 1 hour and then heat-treated at 600°C for 12 hours in a nitrogen gas flow of 10 mL/min (gas pressure: 0.1 MPa), thereby obtaining BaTiO₃₋ₓN_{y} powder.

### [Loading Ni on BaTiO₃₋ₓN_{y}]

BaTiO₃₋ₓN_{y} powder (0.50 g) obtained as described above and Ni(C₅H₅)₂ (0.08 g, 98%, manufactured by Tokyo Chemical Industry) (corresponding to 5 % by mass of supported metal Ni relative to BaTiO₃₋ₓN_{y}) were placed in a quartz glass reaction tube. Hydrogen was then flowed through the resulting quartz glass reaction tube at 2.5 mL/min, and the temperature was raised to 250°C over 0.5 hours and then maintained for an additional 1.5 hours, thereby obtaining a metal-supported material in which Ni was fixed to BaTiO₃₋ₓN_{y} (hereinafter, 5 % by mass Ni/BaTiO₃₋ₓN_{y}).

Ammonia decomposition was then carried out as described below using the ammonia decomposition catalyst thus obtained.

### [Ammonia Decomposition Using Ni-Supported BaTiO₃₋ₓN_{y}]

### <Ammonia Decomposition Reaction>

Using 5 % by mass Ni/BaTiO₃₋ₓN_{y} prepared in Comparative Example 1 as an ammonia decomposition catalyst, a reaction was carried out to decompose ammonia to generate nitrogen and hydrogen. The reaction was carried out in a fixed-bed flow reaction apparatus equipped with a glass tube packed with 0.1 g of the Ni supported material as an ammonia decomposition catalyst. Before the reaction, nitrogen at 5 mL/min and hydrogen at 15 mL/min were flowed, heated to 500°C in 1 hour, and maintained for 1 hour to pretreat the catalyst. In the ammonia decomposition reaction, the flow rate of ammonia gas was set to NH₃: 25 mL/min (weight hourly space velocity (WHSV) 15000 mL g⁻¹h⁻¹), and the reaction was carried out at a reaction pressure of 0.1 MPa. The gas exiting from the fixed-bed flow reaction apparatus was collected, and the components of the collected gas were quantified by gas chromatography. The ammonia decomposition efficiency (NH₃ conversion) at 360°C to 660°C was measured. The results are shown in Table 1 and Fig. 3.

### (Comparative Example 2)

### [Loading Ni on CeO₂]

Except that CeO₂ (manufactured by Aldrich) was used as the support in place of BaSiN₂, a metal-supported material in which Ni was fixed to CeO₂ (hereinafter, 5 % by mass Ni/CeO₂) was obtained in the same manner as in Example 1.

Ammonia decomposition was then carried out as described below using the ammonia decomposition catalyst thus obtained.

### [Ammonia decomposition using Ni-supported CeO₂]

### <Ammonia Decomposition Reaction>

Except for using 5 % by mass Ni/CeO₂ prepared in Comparative Example 2, the same method as in Example 1 was carried out to perform a reaction to decompose ammonia to generate nitrogen and hydrogen. The results are shown in Table 1 and Fig. 3.

**[Table 1]**

| | Catalyst | Ammonia Decomposition Efficiency* |
|---|---|---|
| Example 1 | 5% by mass Ni /BaSiN₂ | 88% |
| Example 2 | 5% by mass Ru /BaSiN₂ | >99% |
| Example 3 | 5% by mass Co BaSiN₂ | 85% |
| Example 4 | 5% by mass Fe /BaSiN₂ | 74% |
| Comparative Example 1 | 5% by mass Ni /BaTiO₃₋ₓN_{y} | 58% |
| Comparative Example 2 | 5% by mass Ni /CeO₂ | 24% |

| | | |
|---|---|---|
| *Reaction conditions Temperature: 500°C; pressure: 0.1 MPa; WHSV: 15000 mL g⁻¹h⁻¹ | | |

### (Discussion)

From Table 1 and FIGS. 3 and 4, it was found that when the ternary nitride BaSiN₂ is used as a support, it functions as an excellent ammonia synthesis and decomposition catalyst. The catalyst exhibits high ammonia decomposition reaction activity as compared with BaTiO₃₋ₓN_{y}-type titanium oxynitride catalysts and CeO₂-type oxide catalysts. Furthermore, it is an ammonia decomposition catalyst having stable catalytic properties such that it can be repeatedly used in reactions even after being exposed to air, and therefore has superior properties to conventional oxyhydrides and oxynitride hydrides.

## Claims

1. A barium nitride represented by the following general formula (1):
BaAN₂₋ₓ (1)
wherein in general formula (1), A represents at least one element selected from the group consisting of Si, Fe, Ni, Mo, and Zr, and x represents a value expressed by 0 ≤ x < 2.0).

2. The barium nitride according to claim 1, wherein, in the general formula (1), A is Si.

3. A metal-supported material in which a transition metal is supported on a support,
wherein the support comprises the barium nitride according to claim 1 or 2.

4. The metal-supported material according to claim 3, wherein the transition metal is at least one metal element selected from the group consisting of Group 8, Group 9, and Group 10 metal elements of the periodic table.

5. The metal-supported material according to claim 3, wherein the transition metal is at least one metal selected from the group consisting of Ru, Ni, Fe, and Co.

6. The metal-supported material according to claim 3, wherein the transition metal is at least one metal selected from the group consisting of Ru and Ni.

7. An ammonia decomposition catalyst comprising the barium nitride according to claim 1 or 2.

8. An ammonia decomposition catalyst comprising the metal-supported material according to claim 3.

9. A method for producing hydrogen, comprising a step of bringing the ammonia decomposition catalyst according to claim 7 into contact with ammonia and a step of collecting hydrogen produced in the above step.

10. A method for producing hydrogen, comprising a step of bringing the ammonia decomposition catalyst according to claim 8 into contact with ammonia and a step of collecting hydrogen produced in the step.

11. Use of the barium nitride according to claim 1 or 2 as an ammonia decomposition catalyst.

12. Use of the metal-supported material according to claim 3 as an ammonia decomposition catalyst.
